# EUROPEAN PATENT APPLICATION

(11) **EP 4 716 305 A1**
(43) Date of publication of application: **25.03.2026**
(21) Application number: 24921076.6
(22) Date of filing: 04.02.2024
(51) Int. Cl.: H04W 40/22

(54) **RELAY COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: GUO, Yali, Dongguan, Guangdong 523860 (CN); LU, Fei, Dongguan, Guangdong 523860 (CN)
(74) Representative: Grassi, Stefano
(86) International application number: PCT/CN2024/075829
(87) International publication number: WO 2025/161023

(57) **Abstract**

The present application relates to a relay communication method, a terminal device, and a network device. The relay communication method comprises: a terminal device receives a near-field communication rule, the near-field communication rule comprising an RSC and multi-hop relay authorization information corresponding to the RSC. The present application can realize multi-hop relay communication by means of a plurality of relay UEs.

## Description

### TECHNICAL FIELD

This application relates to the field of communications, and more particularly, to a relay communication method, a terminal device, and a network device.

### BACKGROUND

**In** related technologies, when a remote User Equipment (UE) needs to communicate with a network, if it cannot directly access the network, it can discover and select a relay UE and communicate with the network via this relay UE. Alternatively, when one UE needs to communicate with another UE, if direct proximity-based communication is not possible, it can discover and select a relay UE and communicate with the other UE via this relay UE. However, existing relay communication can only be achieved through a single relay UE. How to achieve multi-hop relay communication through multiple relay UEs is a technical problem that needs to be solved.

### SAMMARY

Embodiments of the present disclosure provide a relay communication method, a terminal device, and a network device, which can achieve multi-hop relay communication through multiple relay UEs.

An embodiment of the present disclosure provides a relay communication method, including:
receiving, by a terminal device, a proximity communication policy, wherein the proximity communication policy includes a Relay Service Code (RSC) and multi-hop relay authorization information corresponding to the RSC.

An embodiment of the present disclosure provides a relay communication method, including:
sending, by a network device, a proximity communication policy to a terminal device, wherein the proximity communication policy includes an RSC and multi-hop relay authorization information corresponding to the RSC.

An embodiment of the present disclosure provides a terminal device, including:
a first transceiver module, configured to receive a proximity communication policy, wherein the proximity communication policy includes an RSC and multi-hop relay authorization information corresponding to the RSC.

An embodiment of the present disclosure provides a network device, including:
a second transceiver module, configured to send a proximity communication policy to a terminal device, wherein the proximity communication policy includes an RSC and multi-hop relay authorization information corresponding to the RSC.

An embodiment of the present disclosure provides a terminal device, including: a transceiver, a processor, and a memory. The memory is configured to store a computer program, the transceiver is configured to communicate with other devices, and the processor is configured to invoke and run the computer program stored in the memory to cause the terminal device to execute the aforementioned relay communication method.

An embodiment of the present disclosure provides a network device, including: a transceiver, a processor, and a memory. The memory is configured to store a computer program, the transceiver is configured to communicate with other devices, and the processor is configured to invoke and run the computer program stored in the memory to cause the network device to execute the aforementioned relay communication method.

An embodiment of the present disclosure provides a chip, configured to implement the aforementioned relay communication methods.

Specifically, the chip includes: a processor, configured to invoke and run a computer program from a memory, to cause a device equipped with the chip to execute the aforementioned relay communication methods.

An embodiment of the present disclosure provides a computer-readable storage medium, configured to store a computer program, wherein when the computer program is run by a device, the device is caused to execute the aforementioned relay communication method.

An embodiment of the present disclosure provides a computer program product, including computer program instructions, wherein the computer program instructions cause a computer to execute the aforementioned relay communication method.

An embodiment of the present disclosure provides a computer program, wherein when run on a computer, it causes the computer to execute the aforementioned relay communication method.

By adopting the embodiments of the present disclosure, a terminal device receives a proximity communication policy that includes multi-hop relay authorization information, which enables authorization of the terminal device's multi-hop relay capability, thereby achieving multi-hop relay communication.

### BRIEF DESCRIPTION OF THE DRAWINGS

FIG. 1 is a first schematic diagram of a 5G network system architecture.
FIG. 2 is a second schematic diagram of a 5G network system architecture.
FIG. 3 is a schematic diagram of an architectural model for relay communication using a UE-to-Network Relay.
FIG. 4 is a schematic diagram of an architectural model for relay communication using a UE-to-UE Relay.
FIG. 5 is a schematic flowchart of a relay communication method 500 according to an embodiment of the present disclosure.
FIG. 6 is a schematic diagram of an architectural model using multi-hop relay between a remote UE and a core network element according to an embodiment of the present disclosure.
FIG. 7 is a schematic diagram of an architectural model using multi-hop relay between two UEs according to an embodiment of the present disclosure.
FIG. 8 is a flowchart of implementation according to a first embodiment of the present disclosure.
FIG. 9 is a flowchart of implementation according to a second embodiment of the present disclosure.
FIG. 10 is a flowchart of implementation according to a third embodiment of the present disclosure.
FIG. 11 is a flowchart of implementation according to a fourth embodiment of the present disclosure.
FIG. 12 is a schematic flowchart of a relay communication method 1200 according to an embodiment of the present disclosure.
FIG. 13 is a schematic block diagram of a terminal device 1300 according to an embodiment of the present disclosure.
FIG. 14 is a schematic block diagram of a terminal device 1400 according to an embodiment of the present disclosure.
FIG. 15 is a schematic block diagram of a network device 1500 according to an embodiment of the present disclosure.
FIG. 16 is a schematic structural diagram of a communication device 1600 according to an embodiment of the present disclosure.
FIG. 17 is a schematic structural diagram of a chip 1700 according to an embodiment of the present disclosure.

### DETAILED DESCRIPTION

The technical solutions in the embodiments of the present disclosure will be described below with reference to the accompanying drawings in the embodiments of the present disclosure.

The technical solutions of the embodiments of the present disclosure can be applied to various communication systems, for example: Long Term Evolution (LTE) system, Advanced Long Term Evolution (LTE-A) system, New Radio (NR) system, evolution system of NR system, LTE-based access to unlicensed spectrum (LTE-U) system, NR-based access to unlicensed spectrum (NR-U) system, Non-Terrestrial Networks (NTN) system, Universal Mobile Telecommunication System (UMTS), Wireless Local Area Networks (WLAN), Wireless Fidelity (Wi-Fi), 5th-Generation (5G) system, or other communication systems.

Generally, traditional communication systems support a limited number of connections and are easy to implement. However, with the development of communication technology, mobile communication systems will not only support traditional communication but also support, for example, Device to Device (D2D) communication, Machine to Machine (M2M) communication, Machine Type Communication (MTC), Vehicle to Vehicle (V2V) communication, or Vehicle to everything (V2X) communication, etc. The embodiments of the present disclosure can also be applied to these communication systems.

**In** an embodiment, the communication system in the embodiments of the present disclosure can be applied to a Carrier Aggregation (CA) scenario, can also be applied to a Dual Connectivity (DC) scenario, and can also be applied to a Standalone (SA) deployment scenario.

**In** an embodiment, the communication system in the embodiments of the present disclosure can be applied to unlicensed spectrum, where the unlicensed spectrum can also be considered as shared spectrum; or the communication system in the embodiments of the present disclosure can be applied to licensed spectrum, where the licensed spectrum can also be considered as non-shared spectrum.

The embodiments of the present disclosure describe various embodiments in conjunction with a network device and a terminal device. The terminal device may also be referred to as User Equipment (UE), access terminal, subscriber unit, subscriber station, mobile station, mobile platform, remote station, remote terminal, mobile device, user terminal, terminal, wireless communication device, user agent, or user apparatus, etc.

The terminal device can be a station (ST) in a WLAN, can be a cellular phone, a cordless phone, a Session Initiation Protocol (SIP) phone, a Wireless Local Loop (WLL) station, a Personal Digital Assistant (PDA) device, a handheld device with wireless communication function, a computing device, or other processing device connected to a wireless modem, an in-vehicle device, a wearable device, a terminal device in a next-generation communication system such as an NR network, or a terminal device in a future evolved Public Land Mobile Network (PLMN) network, etc.

In the embodiments of the present disclosure, the terminal device can be deployed on land, including indoor or outdoor, handheld, wearable, or vehicle-mounted; it can also be deployed on water (such as on a ship, etc.); it can also be deployed in the air (for example, on an airplane, a balloon, and a satellite, etc.).

In the embodiments of the present disclosure, the terminal device can be a mobile phone, a tablet computer (Pad), a computer with wireless transceiver function, a Virtual Reality (VR) terminal device, an Augmented Reality (AR) terminal device, a wireless terminal device in industrial control, a wireless terminal device in self-driving, a wireless terminal device in remote medical, a wireless terminal device in a smart grid, a wireless terminal device in transportation safety, a wireless terminal device in a smart city, or a wireless terminal device in a smart home, etc.

By way of example and not limitation, in the embodiments of the present disclosure, the terminal device can also be a wearable device. A wearable device can also be called a wearable smart device, which is a general term for intelligently designed daily wearables developed by applying wearable technology, such as glasses, gloves, watches, clothing, and shoes, etc. A wearable device is a portable device that is directly worn on the body or integrated into the user's clothing or accessories. A wearable device is not only a hardware device but also enables powerful functions through software support, data interaction, and cloud interaction. Generalized wearable smart devices include devices with full functionality and large size, which can implement complete or partial functions without relying on a smartphone, such as smart watches or smart glasses, etc., and devices focused on a specific type of application function, which need to be used in conjunction with other devices such as smartphones, such as various smart bracelets and smart jewelry for vital sign monitoring.

In the embodiments of the present disclosure, the network device can be a device used for communicating with a mobile device. The network device can be an Access Point (AP) in a WLAN, an Evolutional Node B (eNB or eNodeB) in LTE, or a relay station or access point, or an in-vehicle device, a wearable device, or a network device (gNB) in an NR network, or a network device in a future evolved PLMN network, or a network device in an NTN network, etc.

By way of example and not limitation, in the embodiments of the present disclosure, the network device may have mobility characteristics, for example, the network device may be a mobile device. Optionally, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, etc. Optionally, the network device may also be a base station set up on land, water, or other locations.

In the embodiments of the present disclosure, the network device can provide services for a cell. The terminal device communicates with the network device using transmission resources (e.g., frequency domain resources, or spectrum resources) used by the cell. The cell may be a cell corresponding to a network device (e.g., a base station). The cell may belong to a macro base station, or may belong to a base station corresponding to a small cell. The small cell here may include: Metro cell, Micro cell, Pico cell, Femto cell, etc. These small cells have characteristics of small coverage range and low transmission power, and are suitable for providing high-speed data transmission services.

In the embodiments of the present disclosure, the network device may include an access network device and a core network device. The access network device may be an evolved Node B (eNB) in a Long-Term Evolution (LTE) system, a next-generation (mobile communication system) (next radio, NR) system, or an Authorized Auxiliary Access Long-Term Evolution (LAA-LTE) system, a macro base station, a micro base station (also referred to as a "small cell"), a pico base station, an access point (AP), a transmission point (TP), or a new generation Node B (gNodeB), etc.

It should be understood that devices having communication functions in the network/system in the embodiments of the present disclosure may be referred to as communication devices. The communication devices may include network devices and terminal devices having communication functions. The network devices and terminal devices may be the specific devices in the embodiments of the present disclosure, which will not be repeated here. The communication devices may also include other devices in the communication system, such as network controllers, mobility management entities, and other network entities, which are not limited in the embodiments of the present disclosure.

It should be understood that the terms "system" and "network" are often used interchangeably herein. The term "and/or" in this document describes only an association relationship between associated objects, indicating that three relationships may exist. For example, A and/or B may indicate: A exists alone, both A and B exist, and B exists alone. In addition, the character "/" in this document generally indicates that the associated objects are in an "or" relationship.

It should be understood that the term "indication" mentioned in the embodiments of the present disclosure may be a direct indication, an indirect indication, or may represent an association relationship. For example, A indicating B may mean that A directly indicates B, for example, B can be obtained through A; it may also mean that A indirectly indicates B, for example, A indicates C, and B can be obtained through C; it may also mean that there is an association relationship between A and B.

In the description of the embodiments of the present disclosure, the term "corresponding" may indicate that there is a direct or indirect correspondence between the two, may also indicate that there is an association relationship between the two, or may indicate a relationship of indicating and being indicated, configuring and being configured, etc.

To facilitate understanding of the technical solutions of the embodiments of the present disclosure, the related technologies of the embodiments of the present disclosure are described below. The following related technologies, as optional solutions, can be combined arbitrarily with the technical solutions of the embodiments of the present disclosure, and all fall within the protection scope of the embodiments of the present disclosure.

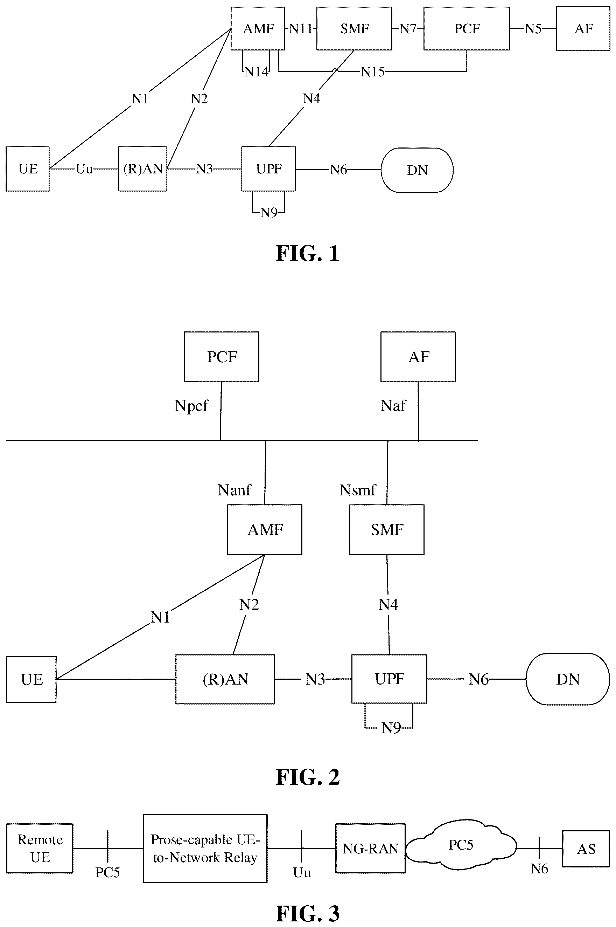

The embodiments of the present disclosure are applicable to mobile networks, that is, cellular networks. The following embodiments are described by taking a 5G network as an example, but the embodiments of the present disclosure are not limited to 5G networks and can also be used for future mobile networks, such as 6G networks, etc. The architecture diagrams of the 5G network system are shown in FIG. 1 and FIG. 2. In FIG. 1, core network elements are connected to each other through agreed interfaces. In FIG. 2, core network elements interact by invoking services provided by the network elements. The embodiments of the present disclosure do not limit whether the interface method or the service invocation mode is adopted between network elements. The UE establishes an access stratum connection with the AN through the Uu interface to exchange access stratum messages and wireless data transmission. The UE establishes a non-access stratum (NAS) connection with the AMF through the N1 interface to exchange NAS messages. The AMF is the mobility management function in the core network, and the SMF is the session management function in the core network. In addition to mobility management of the UE, the AMF is also responsible for forwarding session management-related messages between the UE and the SMF. The PCF is the policy management function in the core network, responsible for formulating policies related to mobility management, session management, billing, etc., for the UE. The UPF is the user plane function in the core network, which transmits data with an external data network through the N6 interface and transmits data with the AN through the N3 interface. After the UE accesses the 5G network through the Uu interface, it establishes a PDU session under the control of the SMF for data transmission.

A UE with Proximity-based Services (ProSe) capability can also communicate directly with another ProSe-capable UE through the PC5 interface.

FIG. 3 is a schematic diagram of an architectural model for relay communication using a UE-to-Network Relay. As shown in FIG. 3, when a UE can connect to an external data network through the 5G network and also has ProSe capability, this UE can act as a relay UE (Relay UE); another ProSe-capable remote UE (Remote UE) can establish a direct connection with the Relay UE through the PC5 interface and interact with the external network through the PDU session established by the Relay UE with the 5G network. This Relay UE is connected to the operator's network and can be called a UE-to-Network Relay.

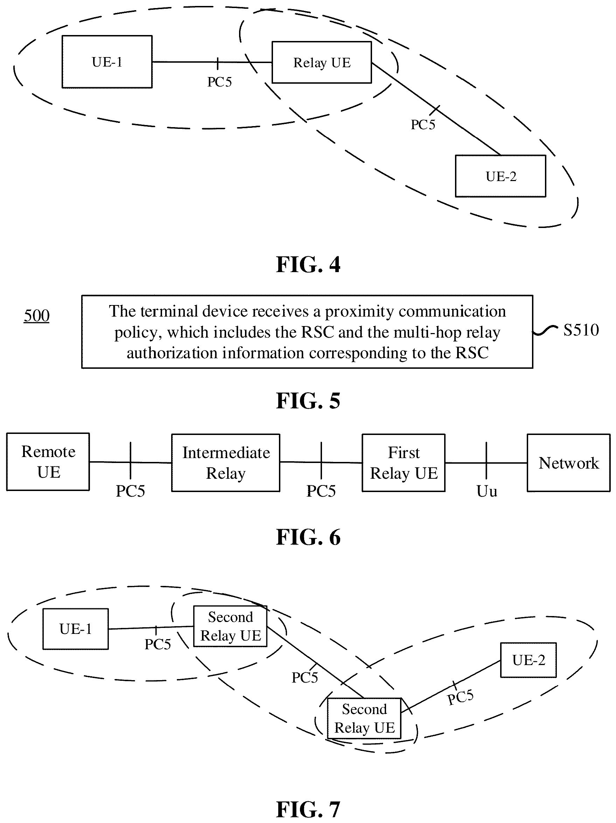

FIG. 4 is a schematic diagram of an architectural model for relay communication using a UE-to-UE Relay. As shown in FIG. 4, when two ProSe-capable UEs are far apart and cannot establish communication directly through the PC5 interface, they can communicate through a ProSe-capable relay UE. As shown in FIG. 4, the relay UE (Relay UE) can communicate directly with UE-1 through the PC5 interface and can also communicate directly with UE-2 through the PC5 interface. Then UE-1 and UE-2 can perform service interaction through the relay UE. This relay UE can be called a UE-to-UE Relay.

FIG. 3 and FIG. 4 above show examples of single-hop relay, that is, a remote UE communicates with the network through one relay UE, or two UEs communicate through one relay UE. However, in some cases, communication cannot be established through a single-hop relay. For example, in the scenario where a UE establishes relay communication with the network, when there is no relay UE that can both communicate with the remote UE and communicate with the network, multiple relay UEs may be required for the remote UE to communicate with the network. However, current technology does not support a remote UE communicating with the network through multi-hop relay UEs. Another example, for the scenario where two UEs establish relay communication, when there is no relay UE that is both close to UE1 and close to UE2, multiple relay UEs may be required for UE1 to communicate with UE2. However, current technology does not support UE1 discovering UE2 through multi-hop relay UEs and communicating with UE2 through multi-hop relay UEs.

FIG. 5 is a schematic flowchart of a relay communication method 500 according to an embodiment of the present disclosure. The method can optionally be applied to the system shown in FIGS. 1-4, but is not limited thereto. The method includes at least part of the following content.

S510: A terminal device receives a proximity communication policy, wherein the proximity communication policy includes a Relay Service Code (RSC) and multi-hop relay authorization information corresponding to the RSC.

Here, the RSC represents a relay service that can be provided.

**In** an example, the proximity communication policy includes one RSC and multi-hop relay authorization information corresponding to the RSC.

**In** an example, the proximity communication policy includes multiple RSCs and multi-hop relay authorization information corresponding to each of some or all of the multiple RSCs.

The terminal device may receive the proximity communication policy from a core network element. For example, the PCF directly sends the proximity communication policy to the terminal device, or the PCF forwards the proximity communication policy to the terminal device via the AMF.

In some embodiments, the multi-hop relay authorization information includes at least one of the following:
whether multi-hop relay is permitted; or
an allowed maximum number of multi-hop relays.

Here, the allowed maximum number of multi-hop relays may represent the maximum number of relay nodes allowed to be passed through for the relay service represented by the corresponding RSC.

The relay communication method proposed in the embodiments of the present disclosure can support multi-hop relay between a remote UE and a network, and/or support multi-hop relay between two UEs.

FIG. 6 is a schematic diagram of an architectural model using multi-hop relay between a remote UE and a core network element according to an embodiment of the present disclosure. The remote UE and the core network element can be connected through multiple relays. As shown in FIG. 6, a relay UE is connected to the operator network. For distinction, this relay UE connected to the operator network is hereinafter referred to as a first relay UE; the remote UE accesses the operator network through one or more intermediate relays and the first relay UE; the one or more intermediate relays are located between the remote UE and the first relay UE. The intermediate relay is a new type of relay proposed in the embodiments of the present disclosure, which will be described in detail below. In the example of FIG. 6, there is one intermediate relay between the remote UE and the first relay UE.

In some embodiments, the intermediate relay is connected to the remote UE and the first relay UE, respectively. In this case, there is one intermediate relay between the remote UE and the first relay UE.

In some embodiments, the intermediate relay is connected to the remote UE and another intermediate relay, respectively; or the intermediate relay is connected to two other intermediate relays, respectively; or the intermediate relay is connected to another intermediate relay and the first relay UE, respectively. In this case, there are multiple intermediate relays between the remote UE and the first relay UE.

FIG. 7 is a schematic diagram of an architectural model using multi-hop relay between two UEs according to an embodiment of the present disclosure. Two endpoint UEs (such as UE-1 and UE-2 in FIG. 7) can be connected through multiple relay UEs. For distinction, the relay UEs located between the two endpoint UEs are hereinafter referred to as second relay UEs; an endpoint UE is connected to another endpoint UE through multiple second relay UEs.

In some embodiments, a second relay UE is connected to an endpoint UE and another second relay UE, respectively; or a second relay UE is connected to two other second relay UEs, respectively.

In the scenario shown in FIG. 6, the aforementioned proximity communication policy may also authorize a UE to be a remote UE, or authorize a UE to be an intermediate relay, or authorize a UE to be a first relay UE. In the scenario shown in FIG. 7, the aforementioned proximity communication policy may also authorize a UE to be an endpoint UE, or authorize a UE to be a second relay UE. After authorizing the UE, the multi-hop relay discovery process can be used to obtain relay information, thereby establishing a connection through multi-hop relay. The following specific embodiments are introduced for the scenarios shown in FIG. 6 and FIG. 7, respectively.

### First embodiment:

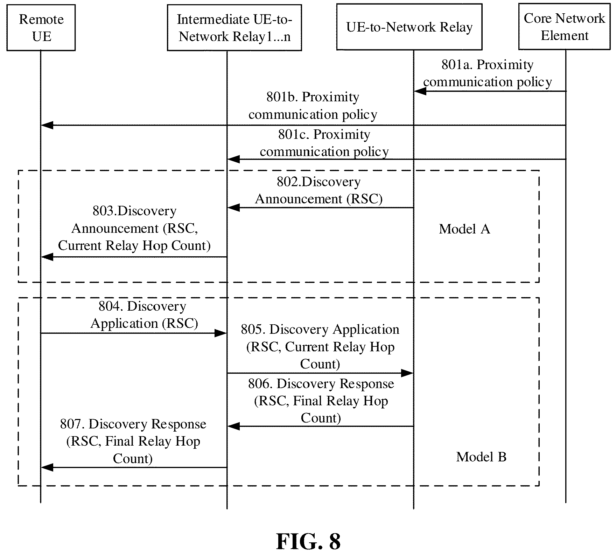

FIG. 8 is a flowchart of implementation according to the first embodiment of the present disclosure. This embodiment can be applied to the scenario shown in FIG. 6, that is, the scenario where a remote UE communicates with the network through multiple relay UEs.

In some examples, a core network element (e.g., PCF) configures a proximity communication policy for a UE. The proximity communication policy can authorize a UE to be a remote UE; or authorize a UE to be a first relay UE (or called a UE-to-Network Relay), or authorize a UE to be an intermediate relay (or called an intermediate UE-to-Network Relay).

Methods for authorizing a UE to be an intermediate relay through the proximity communication policy include, for example, at least one of the following:
directly indicating authorization for the UE to be an intermediate relay; or
authorizing the UE to be both a remote UE and a first relay UE.

The proximity communication policy includes one or more RSCs and multi-hop relay authorization information corresponding to each RSC. The RSC represents a relay service that can be provided.

The multi-hop relay authorization information includes, for example, at least one of the following:
whether multi-hop relay is permitted; or
an allowed maximum number of multi-hop relays.

After authorizing the remote UE and the relay UEs (including the first relay UE and intermediate relays), the remote UE obtains information about the relay UEs through the multi-hop relay discovery process, thereby accessing the network through multi-hop relay. Multi-hop relay discovery includes two discovery modes: Mode A and Mode B, which correspond to the two discovery methods included in the dashed boxes in FIG. 8, respectively. The two methods are two parallel options, and the remote UE can adopt either discovery method. As shown in FIG. 8, it includes at least part of the following steps.

Step 801: a core network element, such as the PCF, configures a proximity communication policy for a UE. It may be a message sent directly, or forwarded to the UE through other network elements, such as the AMF. The configuration for the UE-to-Network Relay is step 801a, the configuration for the intermediate UE-to-Network Relay is step 801b, and the configuration for the Remote UE is step 801c. Steps 801a, 801b, and 801c have no chronological order. Specifically:

In step 801a, the core network element sends a proximity communication policy to the UE, authorizing the UE to be a UE-to-Network Relay. The proximity communication policy includes one or more relay service codes (RSCs) and multi-hop relay information corresponding to each RSC.

In step 801b, the core network element sends a proximity communication policy to the UE, authorizing the UE to be a Remote UE. The proximity communication policy includes one or more relay service codes (RSCs) and multi-hop relay information corresponding to each RSC.

In step 801c, the core network element sends a proximity communication policy to the UE, authorizing the UE to be an intermediate UE-to-Network Relay.

In step 801c, the proximity communication policy may directly indicate authorization for the UE to be an intermediate UE-to-Network Relay. The proximity communication policy includes one or more relay service codes (RSCs) and multi-hop relay information corresponding to each RSC;

Alternatively, the proximity communication policy may include both information authorizing the UE to be a Remote UE and information authorizing the UE to be a UE-to-Network Relay, that is, granting the UE two identities represents authorizing the UE to become an intermediate UE-to-Network Relay. The proximity communication policy includes one or more relay service codes (RSCs) and multi-hop relay information corresponding to each RSC.

The discovery method of Mode A includes the following steps 802 to 803:

Step 802: a UE acting as a UE-to-Network Relay sends a discovery announcement message, which carries an RSC, announcing that it can provide UE-to-Network Relay service for that RSC. The discovery announcement message may be a broadcast message. The discovery announcement information may carry a first relay hop count, which is the current relay hop count information (or called the number of relay hops that have occurred). The value of the current relay hop count information may be 1. Alternatively, if the discovery announcement message does not carry the current relay hop count information, it can be understood that the current relay hop count is an initial default value. For example, the initial default value of the current relay hop count = 1, representing that this UE is the first relay UE connected to the network. The specific value is not specified in this application, and the specific values appearing in this embodiment and subsequent embodiments are examples and do not limit the present disclosure.

Step 803: a UE acting as an intermediate UE-to-Network Relay receives a discovery announcement message. The discovery announcement message carries an RSC and/or a first relay hop count, which is the current relay hop count. The discovery announcement message may be received from a UE-to-Network Relay or from another intermediate UE-to-Network Relay. That is, there can be multiple intermediate UE-to-Network Relays between the UE and the network.

The intermediate UE-to-Network Relay determines whether it can continue to send the discovery announcement message in the capacity of an intermediate UE-to-Network Relay based on the RSC and/or the current relay hop count in the received discovery announcement message and the RSC and multi-hop relay authorization information authorized in step 801c. In a case where it is determined to continue sending the discovery announcement message, the intermediate UE-to-Network Relay updates or determines the current relay hop count carried in the discovery announcement message, and continues to send the discovery announcement message. The sent discovery announcement message carries the RSC and the current relay hop count. In an example, the current relay hop count carried in the sent discovery announcement message is equal to the current relay hop count carried in the received discovery announcement message (or the default value of the current relay hop count) + 1.

For example, if the intermediate UE-to-Network Relay receives a discovery announcement message from a UE-to-Network Relay that carries RSC 1, and the discovery announcement message does not carry the current relay hop count, indicating that the default value of the current relay hop count = 1; and, the intermediate UE-to-Network Relay received RSC 1 and the corresponding allowed maximum number of multi-hop relays = 3 for RSC 1 in the authorization process step 801c; based on this information, the intermediate UE-to-Network Relay determines that the allowed maximum number of multi-hop relays corresponding to RSC 1 is greater than the initial default value of the relay hop count, therefore, this intermediate UE-to-Network Relay can continue to send the discovery announcement message in the capacity of an intermediate UE-to-Network Relay, and the current relay hop count carried in the discovery announcement message = 2 (i.e., the default value of the current relay hop count + 1).

For another example, if the intermediate UE-to-Network Relay receives a discovery announcement message from another intermediate UE-to-Network Relay that carries RSC 1 and the corresponding current relay hop count for RSC 1 = 2; and, the intermediate UE-to-Network Relay received RSC 1 and the corresponding allowed maximum number of multi-hop relays = 3 for RSC 1 in the authorization process step 801c; based on this information, the intermediate UE-to-Network Relay determines that the allowed maximum number of multi-hop relays corresponding to RSC 1 is greater than the current relay hop count, therefore, this intermediate UE-to-Network Relay can continue to send the discovery announcement message in the capacity of an intermediate UE-to-Network Relay, and the current relay hop count carried in the discovery announcement message = 3 (i.e., the current relay hop count carried in the received discovery announcement message + 1).

If the intermediate UE-to-Network Relay determines that the allowed maximum number of multi-hop relays corresponding to the RSC is less than or equal to the current relay hop count corresponding to the RSC in the received discovery announcement message, it does not continue to send the discovery announcement message.

The Remote UE can receive discovery announcement messages from multiple devices. The Remote UE obtains the relay services (identified by RSC) that the intermediate UE-to-Network Relay can support based on the received discovery announcement messages, and can also determine how many relays it needs to pass through between itself and the network through the current relay hop count, thereby selecting an appropriate relay to access the network, for example, preferentially selecting a relay with a smaller current relay hop count.

The discovery method of Mode B includes the following steps 804 to 807.

Step 804: The Remote UE sends a discovery application message, which carries an RSC, indicating that it needs the UE-to-Network Relay service for that RSC. The discovery application message may be a broadcast message.

Step 805: A UE acting as an intermediate UE-to-Network Relay receives a discovery application message. The discovery application message may be received from the Remote UE, in which case it does not carry the current relay hop count (in this case, for example, the current relay hop count defaults to 0); the discovery application message may also be received from another intermediate UE-to-Network Relay, in which case it carries the current relay hop count. That is, there can be multiple intermediate UE-to-Network Relays between the UE and the network. The intermediate UE-to-Network Relay determines whether it can continue to send the discovery application message in the capacity of an intermediate UE-to-Network Relay based on the RSC and/or the current relay hop count in the received discovery application message and the RSC and multi-hop relay authorization information authorized in step 801c. In a case where it is determined to continue sending the discovery application message, the intermediate UE-to-Network Relay updates or determines the current relay hop count carried in the discovery application message, and continues to send the discovery application message. The sent discovery application message carries the RSC and the current relay hop count. In an example, the current relay hop count carried in the sent discovery application message is equal to the current relay hop count carried in the received discovery application message (or the default value of the current relay hop count) + 1.

The specific method for the intermediate UE-to-Network Relay to determine whether to continue sending the discovery application message can refer to the example in step 803 above and will not be repeated here.

Step 806: The UE-to-Network Relay receives the discovery application message from the intermediate UE-to-Network Relay, and determines whether it can provide services as a UE-to-Network Relay based on the RSC and/or the current relay hop count in the received discovery application message and the RSC and multi-hop relay authorization information authorized in step 801a. If it can, it determines a final relay hop count. For example, the final relay hop count can be equal to the current relay hop count carried in the discovery application message + 1, representing the number of relays including the UE-to-Network Relay. The UE-to-Network Relay returns a discovery response message to the intermediate UE-to-Network Relay, which carries the RSC and the final relay hop count.

For example, the received discovery application message carries RSC 1 and the corresponding current relay hop count for RSC 1 = 2, and the allowed maximum number of multi-hop relays for RSC 1 = 3; based on this information, the UE-to-Network Relay determines that the allowed maximum number of multi-hop relays corresponding to RSC 1 is greater than the current relay hop count, therefore, this UE-to-Network Relay can provide services as a UE-to-Network Relay, and returns a discovery response message to the intermediate UE-to-Network Relay. The final relay hop count carried in the discovery response message = 3 (i.e., the current relay hop count carried in the received discovery application message + 1).

If the UE-to-Network Relay determines that the allowed maximum number of multi-hop relays corresponding to the RSC is less than or equal to the current relay hop count corresponding to the RSC in the received discovery announcement message, it ignores the discovery application message.

Step 807: the intermediate UE-to-Network Relay receives a discovery response message, which may be received from the UE-to-Network Relay or from another intermediate UE-to-Network Relay. The discovery response message carries the RSC and the final relay hop count. The intermediate UE-to-Network Relay sends the discovery response message to the previous hop intermediate UE-to-Network Relay or to the Remote UE, which carries the RSC and the final relay hop count.

The Remote UE obtains the relay services (identified by RSC) that the intermediate UE-to-Network Relay can support based on the received discovery response messages, and can also obtain how many relays it needs to pass through between itself and the network through the final relay hop count, thereby selecting an appropriate relay to access the network, for example, preferentially selecting a relay with a smaller final relay hop count.

### Second embodiment

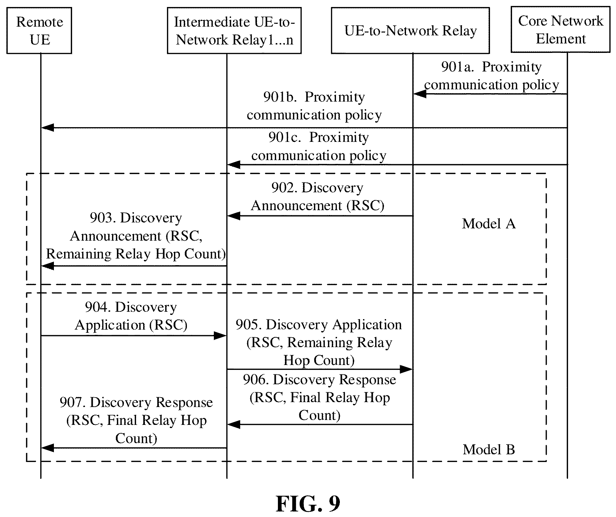

FIG. 9 is a flowchart of implementation according to the second embodiment of the present disclosure. This embodiment can be applied to the scenario shown in FIG. 6, that is, the scenario where a remote UE communicates with the network through multiple relay UEs.

In this embodiment, the authorization method for each UE is the same as in the first embodiment. After authorizing the remote UE and the relay UEs (including the first relay UE and intermediate relays), the remote UE obtains information about the relay UEs through the multi-hop relay discovery process, thereby accessing the network through multi-hop relay. Multi-hop relay discovery includes two discovery modes: Mode A and Mode B, which correspond to the two discovery methods included in the dashed boxes in FIG. 9, respectively. The two methods are two parallel options, and the remote UE can adopt either discovery method. As shown in FIG. 9, it includes at least part of the following steps:

Step 901: a core network element configures a proximity communication policy for a UE, which can refer to step 801 of First embodiment.

The discovery method of Mode A includes the following steps 902 to 903:

Step 902: a UE acting as a UE-to-Network Relay sends a discovery announcement message, which carries an RSC, announcing that it can provide UE-to-Network Relay service for that RSC. The discovery announcement message may be a broadcast message. The discovery announcement information may carry a first relay hop count, which is the remaining relay hop count information. The UE-to-Network Relay sets the remaining relay hop count to the allowed maximum number of multi-hop relays obtained in step 901a minus 1. The discovery announcement information may also not carry the remaining relay hop count information. In this case, the default initial value of the remaining relay hop count = the allowed maximum number of multi-hop relays obtained in step 901a minus 1.

Step 903: a UE acting as an intermediate UE-to-Network Relay receives a discovery announcement message. The discovery announcement message carries an RSC and/or a first relay hop count, which is the remaining relay hop count. The discovery announcement message may be received from a UE-to-Network Relay or from another intermediate UE-to-Network Relay. That is, there can be multiple intermediate UE-to-Network Relays between the UE and the network.

The intermediate UE-to-Network Relay determines whether it can continue to send the discovery announcement message in the capacity of an intermediate UE-to-Network Relay based on the remaining relay hop count in the received discovery announcement message. In a case where it is determined to continue sending the discovery announcement message, the intermediate UE-to-Network Relay updates or determines the remaining relay hop count carried in the discovery announcement message, and continues to send the discovery announcement message. The sent discovery announcement message carries the RSC and the remaining relay hop count. In an example, the current relay hop count carried in the sent discovery announcement message is equal to the remaining relay hop count carried in the received discovery announcement message (or the default initial value of the remaining relay hop count) - 1.

For example, if the intermediate UE-to-Network Relay receives a discovery announcement message that carries RSC 1 and the corresponding remaining relay hop count for RSC 1, and the remaining relay hop count = 2; and, the intermediate UE-to-Network Relay received RSC 1 and the multi-hop relay authorization information corresponding to RSC 1 in the authorization process step 901c, and the multi-hop relay authorization information corresponding to RSC 1 includes information permitting multi-hop relay; based on this information, the intermediate UE-to-Network Relay determines that it can continue to send the discovery announcement message in the capacity of an intermediate UE-to-Network Relay, and the remaining relay hop count carried in the discovery announcement message = 1 (i.e., the remaining relay hop count carried in the received discovery announcement message - 1).

If the remaining relay hop count carried in the discovery announcement message received by the intermediate UE-to-Network Relay is equal to 0, it does not continue to send the discovery announcement message. or if the discovery announcement message received by the intermediate UE-to-Network Relay carries RSC 1 and the corresponding remaining relay hop count, and the remaining relay hop count is greater than 0, but the intermediate UE-to-Network Relay did not receive the multi-hop relay authorization information corresponding to RSC 1 in step 901c (or received the multi-hop relay authorization information corresponding to RSC 1, but the multi-hop relay authorization information includes information not permitting multi-hop relay), then it does not continue to send the discovery announcement message.

The Remote UE can receive discovery announcement messages from multiple devices. The Remote UE obtains the relay services (identified by RSC) that the intermediate UE-to-Network Relay can support based on the received discovery announcement messages, and can also determine how many relays it needs to pass through between itself and the network through the remaining relay hop count, thereby selecting an appropriate relay to access the network, for example, preferentially selecting a relay with a larger remaining relay hop count.

The discovery method of Mode B includes the following steps 904 to 907:

Step 904: the Remote UE sends a discovery application message, which carries an RSC, indicating that it needs the UE-to-Network Relay service for that RSC. The discovery application message may be a broadcast message.

Step 905: a UE acting as an intermediate UE-to-Network Relay receives a discovery application message. The discovery application message may be received from the Remote UE, in which case it does not carry the remaining relay hop count (in this case, for example, the remaining relay hop count defaults to the maximum relay hop count obtained in step 901c); the discovery application message may also be received from another intermediate UE-to-Network Relay, in which case it carries the remaining relay hop count. That is, there can be multiple intermediate UE-to-Network Relays between the UE and the network. The intermediate UE-to-Network Relay can determine whether it can continue to send the discovery application message in the capacity of an intermediate UE-to-Network Relay based on the remaining relay hop count in the received discovery application message. In a case where it is determined to continue sending the discovery application message, the intermediate UE-to-Network Relay updates or determines the remaining relay hop count carried in the discovery application message, and continues to send the discovery application message. The sent discovery application message carries the RSC and the remaining relay hop count. In an example, the remaining relay hop count carried in the sent discovery application message is equal to the remaining relay hop count carried in the received discovery application message (or the default value of the remaining relay hop count) - 1.

The specific method for the intermediate UE-to-Network Relay to determine whether to continue sending the discovery application message can refer to the example in step 903 of this embodiment and will not be repeated here.

Step 906: the UE-to-Network Relay receives the discovery application message from the intermediate UE-to-Network Relay, and determines that it can provide services as a UE-to-Network Relay based on the remaining relay hop count in the received discovery application message. Then it determines a final relay hop count. In an example, the final relay hop count = the allowed maximum number of multi-hop relays - the remaining relay hop count + 1.

For example, if the allowed maximum number of multi-hop relays corresponding to the RSC configured in step 901a is 4, and the remaining relay hop count in the received discovery application message is 3, it means that it has passed through 1 intermediate UE-to-Network Relay. Adding the UE-to-Network Relay itself, a total of 2 relay UEs are needed to connect to the network. Then 2 is taken as the final relay hop count, representing the number of relays including the UE-to-Network Relay. The UE-to-Network Relay returns a discovery response message to the intermediate UE-to-Network Relay, which carries the RSC and the final relay hop count.

Step 907: this step can refer to step 807 in the first embodiment and will not be repeated here.

### Third embodiment

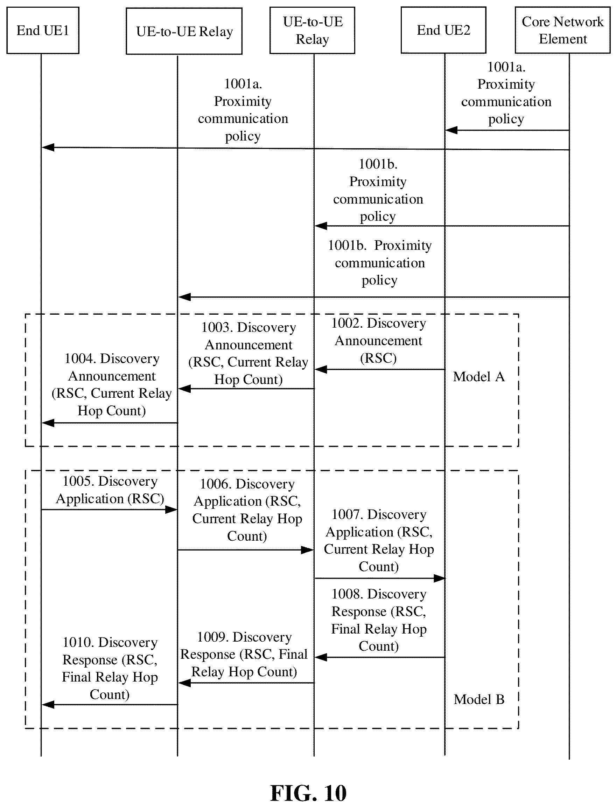

FIG. 10 is a flowchart of implementation according to the third embodiment of the present disclosure. This embodiment can be applied to the scenario shown in FIG. 7, that is, the scenario where UE1 communicates with UE2 through multi-hop relay UEs.

In some examples, a core network element (e.g., PCF) configures a proximity communication policy for a UE. The proximity communication policy can authorize a UE to be an endpoint UE (End UE); or authorize a UE to be a second relay UE (or called a UE-to-UE Relay).

The proximity communication policy includes one or more RSCs and multi-hop relay authorization information corresponding to each RSC. The RSC represents a relay service that can be provided.

The multi-hop relay authorization information includes, for example, at least one of the following:
whether multi-hop relay is permitted; or
an allowed maximum number of multi-hop relays.

After authorizing the End UE and the second relay UEs, the End UE obtains information about the multi-hop relays through the multi-hop relay discovery process, thereby communicating with the other End UE through multi-hop relay. Multi-hop relay discovery includes two discovery modes: Mode A and Mode B, which correspond to the two discovery methods included in the dashed boxes in FIG. 10, respectively. The two methods are two parallel options, and the remote UE can adopt either discovery method. As shown in FIG. 10, it includes at least part of the following steps:

Step 1001: a core network element, such as the PCF, configures a proximity communication policy for a UE. It may be a message sent directly, or forwarded to the UE through other network elements, such as the AMF. The configuration for the End UE is step 1001a, and the configuration for the UE-to-UE Relay is step 1001b. Steps 1001a and 1001b have no chronological order. Specifically:

In step 1001a, the core network element sends a proximity communication policy to the UE, authorizing the UE to be an endpoint UE that can communicate with another End UE through a UE-to-UE Relay. The proximity communication policy includes one or more relay service codes (RSCs) and multi-hop relay information corresponding to each RSC.

In step 1001b, the core network element sends a proximity communication policy to the UE, authorizing the UE to provide UE-to-UE Relay service. The proximity communication policy includes one or more relay service codes (RSCs) and multi-hop relay information corresponding to each RSC.

The discovery method of Mode A includes the following steps 1002 to 1004:

Step 1002: UE2 sends a discovery announcement message, which carries an RSC and UE2 information. The discovery announcement message may be a broadcast message.

Steps 1003-1004: A UE acting as a UE-to-UE Relay receives a discovery announcement message. The discovery announcement message may be received from UE2 or from another UE-to-UE Relay. That is, there can be multiple UE-to-UE Relays between UE1 and UE2. The discovery announcement message includes the RSC and UE2 information. If it is received from UE2, it does not carry the relay hop count information (in this case, for example, the relay hop count defaults to 0); if it is received from another UE-to-UE Relay, it may also carry a first relay hop count, which is the current relay hop count information (or called the number of relay hops that have occurred).

The UE-to-UE Relay determines whether it can continue to send the discovery announcement message in the capacity of a UE-to-UE Relay based on the RSC and/or the current relay hop count in the received discovery announcement message and the RSC and multi-hop relay authorization information authorized in step 1001b. In a case where it is determined to continue sending the discovery announcement message, the UE-to-UE Relay updates or determines the current relay hop count carried in the discovery announcement message, and continues to send the discovery announcement message. The discovery announcement message also carries the RSC and UE2 information. In an example, the current relay hop count carried in the sent discovery announcement message is equal to the current relay hop count carried in the received discovery announcement message (or the default value of the current relay hop count) + 1.

For example, if the UE-to-UE Relay receives a discovery announcement message from UE2 that carries RSC 1, and the discovery announcement message does not carry the current relay hop count, indicating that the initial default value of the current relay hop count = 0; and, the intermediate UE-to-UE Relay received RSC 1 and the corresponding allowed maximum number of multi-hop relays = 3 for RSC 1 in the authorization process step 1001b; based on this information, the UE-to-UE Relay determines that the allowed maximum number of multi-hop relays corresponding to RSC 1 is greater than the default value of the current relay hop count, therefore, this UE-to-UE Relay can continue to send the discovery announcement message in the capacity of a UE-to-UE Relay, and the current relay hop count carried in the discovery announcement message = 1 (i.e., the default value of the current relay hop count + 1).

For another example, if the UE-to-UE Relay receives a discovery announcement message from another UE-to-UE Relay that carries RSC 1 and the corresponding current relay hop count for RSC 1 = 2; and, the UE-to-UE Relay received RSC 1 and the corresponding allowed maximum number of multi-hop relays = 4 for RSC 1 in the authorization process step 1001b; based on this information, the UE-to-UE Relay determines that the allowed maximum number of multi-hop relays corresponding to RSC 1 is greater than the current relay hop count, therefore, this UE-to-UE Relay can continue to send the discovery announcement message in the capacity of a UE-to-UE Relay, and the current relay hop count carried in the discovery announcement message = 3 (i.e., the current relay hop count carried in the received discovery announcement message + 1).

If the UE-to-UE Relay determines that the allowed maximum number of multi-hop relays corresponding to the RSC is less than or equal to the current relay hop count corresponding to the RSC in the received discovery announcement message, it does not continue to send the discovery announcement message.

UE1 can receive discovery announcement messages from multiple devices. UE1 obtains the relay services (identified by RSC) that the UE-to-UE Relay can support based on the received discovery announcement messages, and can also determine how many relays it needs to pass through between itself and UE2 through the current relay hop count, thereby selecting an appropriate relay to communicate with UE2, for example, preferentially selecting a relay with a smaller current relay hop count.

The discovery method of Mode B includes the following steps 1005 to 1010:

Step 1005: UE1 sends a discovery application message, which carries an RSC and UE1 information. The discovery application message may be a broadcast message.

Steps 1006-1007: A UE acting as a UE-to-UE Relay receives a discovery application message. The discovery application message may be received from UE1 or from another UE-to-UE Relay. That is, there can be multiple UE-to-UE Relays between UE1 and UE2. The discovery announcement message includes the RSC and UE1 information. If it is received from UE1, it does not carry the relay hop count information (in this case, for example, the current relay hop count defaults to 0); if it is received from another UE-to-UE Relay, it also carries the current relay hop count. The UE-to-UE Relay determines whether it can continue to send the discovery application message in the capacity of a UE-to-UE Relay based on the RSC and/or the current relay hop count in the received discovery application message and the RSC and multi-hop relay authorization information authorized in step 1001b. In a case where it is determined to continue sending the discovery application message, the UE-to-UE Relay updates or determines the current relay hop count carried in the discovery application message, and continues to send the discovery application message. The sent discovery application message carries the RSC and the current relay hop count, and also carries the RSC and UE1 information. In an example, the current relay hop count carried in the sent discovery application message is equal to the current relay hop count carried in the received discovery application message (or the default value of the current relay hop count) + 1.

The specific method for the UE-to-UE Relay to determine whether to continue sending the discovery application message can refer to the example in steps 1003-1004 above and will not be repeated here.

Step 1008: After UE2 receives the discovery application message, it can send a discovery response message in response to the UE-to-UE Relay. It includes the RSC, UE1 information, UE2 information, and the final relay hop count. Here, the final relay hop count is the current relay hop count in the discovery application message received by the UE.

Steps 1009-1010: The UE-to-UE Relay receives a discovery response message, which may be received from a UE-to-UE Relay or from UE2. The UE-to-UE Relay sends the discovery response message to the previous hop UE-to-UE Relay or to UE1, which carries the RSC, UE1 information, UE2 information, and the final relay hop count.

UE1 obtains the UE-to-UE Relay information based on the received discovery response messages, and obtains how many relays it needs to pass through between itself and UE2 through the final relay hop count, thereby selecting an appropriate relay to access the network, for example, preferentially selecting a relay with a smaller final relay hop count.

### Fourth embodiment

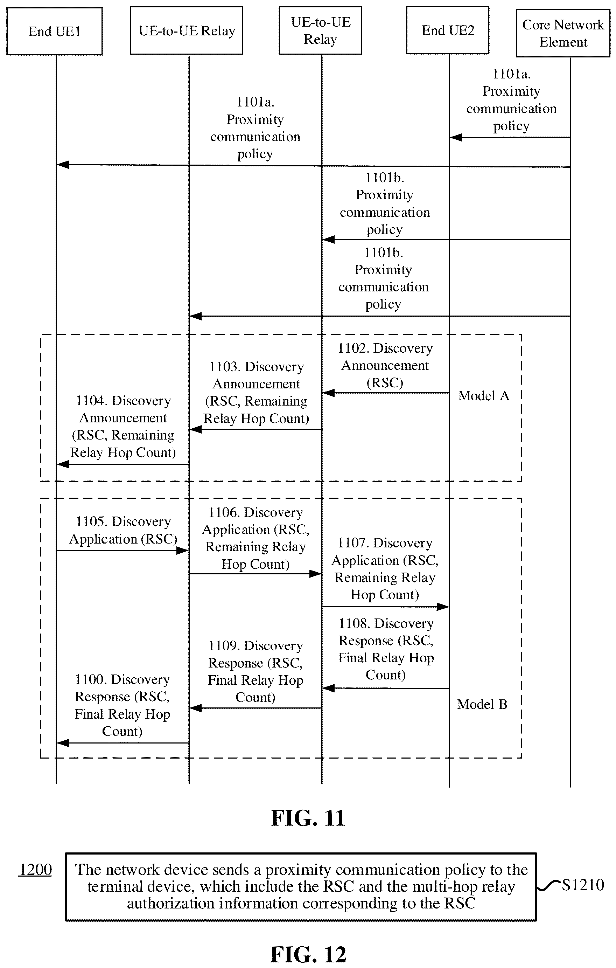

FIG. 11 is a flowchart of implementation according to the fourth embodiment of the present disclosure. This embodiment can be applied to the scenario shown in FIG. 7, that is, the scenario where UE1 communicates with UE2 through multi-hop relay UEs.

In this embodiment, the authorization method for each UE is the same as in the third embodiment. After authorizing the endpoint UE and the second relay UEs (i.e., UE-to-UE Relay), the endpoint UE obtains information about the relay UEs through the multi-hop relay discovery process, thereby communicating with the other endpoint UE through multi-hop relay. Multi-hop relay discovery includes two discovery modes: Mode A and Mode B, which correspond to the two discovery methods included in the dashed boxes in FIG. 11, respectively. The two methods are two parallel options, and the endpoint UE can adopt either discovery method. As shown in FIG. 11, it includes at least part of the following steps:

Step 1101: A core network element configures a proximity communication policy for a UE, which can refer to step 1001 of Third embodiment.

The discovery method of Mode A includes the following steps 1102 to 1104:

Step 1102: UE2 sends an announcement message, which carries an RSC and UE2 information. The discovery announcement message may be a broadcast message.

Steps 1103-1104: A UE acting as a UE-to-UE Relay receives a discovery announcement message. The discovery announcement message may be received from UE2 or from another UE-to-UE Relay. That is, there can be multiple UE-to-UE Relays between UE1 and UE2. The discovery announcement message includes the RSC and UE2 information. If it is received from UE2, it does not carry the remaining relay hop count information (in this case, for example, the remaining relay hop count defaults to the allowed maximum number of multi-hop relays obtained in step 1101b); if it is received from another UE-to-UE Relay, it also carries the remaining relay hop count.

The UE-to-UE Relay determines whether it can continue to send the discovery announcement message in the capacity of a UE-to-UE Relay based on the RSC and/or the remaining relay hop count in the received discovery announcement message and the RSC and multi-hop relay authorization information authorized in step 1101b. In a case where it is determined to continue sending the discovery announcement message, the UE-to-UE Relay updates or determines the remaining relay hop count carried in the discovery announcement message, and continues to send the discovery announcement message. The discovery announcement message also carries the RSC and UE2 information. In an example, the remaining relay hop count carried in the sent discovery announcement message is equal to the remaining relay hop count carried in the received discovery announcement message (or the default value of the remaining relay hop count) - 1.

For example, if the UE-to-UE Relay receives a discovery announcement message that carries RSC 1 and the corresponding remaining relay hop count for RSC 1, and the remaining relay hop count = 2; and, the intermediate UE-to-Network Relay received RSC 1 and the multi-hop relay authorization information corresponding to RSC 1 in the authorization process step 1101b, and the multi-hop relay authorization information corresponding to RSC 1 includes information permitting multi-hop relay; based on this information, the UE-to-UE Relay determines that it can continue to send the discovery announcement message in the capacity of a UE-to-UE Relay, and the remaining relay hop count carried in the discovery announcement message = 1 (i.e., the remaining relay hop count carried in the received discovery announcement message - 1).

If the remaining relay hop count carried in the discovery announcement message received by the UE-to-UE Relay is equal to 0, it does not continue to send the discovery announcement message. or if the discovery announcement message received by the UE-to-UE Relay carries RSC 1 and the corresponding remaining relay hop count, and the remaining relay hop count is greater than 0, but the UE-to-UE Relay did not receive the multi-hop relay authorization information corresponding to RSC 1 in step 1101b (or received the multi-hop relay authorization information corresponding to RSC 1, but the multi-hop relay authorization information includes information not permitting multi-hop relay), then it does not continue to send the discovery announcement message.

UE1 can receive discovery announcement messages from multiple devices. UE1 obtains the relay services (identified by RSC) that the UE-to-UE Relay can support and the peer UE2 information based on the received discovery announcement messages, and can also determine how many relays it needs to pass through between itself and UE2 through the remaining relay hop count (for example, equal to the allowed maximum number of multi-hop relays minus the remaining relay hop count), thereby selecting an appropriate relay to communicate with UE2, for example, preferentially selecting a relay with a larger remaining hop count.

The discovery method of Mode B includes the following steps 1105 to 1110.

### For the discovery method of Mode B

Step 1105: UE1 sends a discovery application message, which carries an RSC and UE1 information. The discovery application message may be a broadcast message.

Steps 1106-1107: a UE acting as a UE-to-UE Relay receives a discovery application message. The discovery application message may be received from UE1 or from another UE-to-UE Relay. That is, there can be multiple UE-to-UE Relays between UE1 and UE2. The discovery application message includes the RSC and UE1 information. If it is received from UE1, it does not carry the relay hop count information (in this case, for example, the remaining relay hop count defaults to the allowed maximum number of multi-hop relays obtained in step 1101b); if it is received from another UE-to-UE Relay, it also carries the remaining relay hop count. The UE-to-UE Relay can determine whether it can continue to send the discovery application message in the capacity of a UE-to-UE Relay based on the remaining relay hop count in the received discovery application message. In a case where it is determined to continue sending the discovery application message, the UE-to-UE Relay updates or determines the remaining relay hop count carried in the discovery application message, and continues to send the discovery application message. The sent discovery application message carries the RSC and UE1 information, and carries the remaining relay hop count. In an example, the remaining relay hop count carried in the sent discovery application message is equal to the remaining relay hop count carried in the received discovery application message (or the default value of the remaining relay hop count) - 1.

The specific method for the UE-to-UE Relay to determine whether to continue sending the discovery application message can refer to the example in steps 1103-1104 of this embodiment and will not be repeated here.

Step 1108: after UE2 receives the discovery application message, it can send a discovery response message in response to the UE-to-UE Relay. It includes the RSC, UE1 information, UE2 information, and the final relay hop count. For example, if the allowed maximum number of multi-hop relays corresponding to the RSC configured in step 1101a is 4, and the remaining relay hop count in the received discovery application message is 1, it means that it has passed through 3 intermediate UE-to-Network Relays, and a total of 3 relay UEs are needed to connect to the network. Then 3 is taken as the final relay hop count, representing the total number of relays needed between UE1 and UE2.

Steps 1109-1110: these steps can refer to steps 1009-1010 in Third embodiment and will not be repeated here.

The embodiments of the present disclosure solve the problem of how to discover relay UEs and obtain the relay hop count in the scenario where a UE needs to communicate with the network through multiple relay UEs, or where two UEs need to communicate through multiple relay UEs, so that the UE can select an appropriate relay UE to access the network or communicate with the peer UE.

Based on the above embodiments, in some embodiments, the relay communication method proposed in the present disclosure may further include:
A terminal device receiving a discovery announcement message or a discovery application message, the discovery announcement message or discovery application message carrying an RSC and/or a first relay hop count;
The terminal device determining whether to continue sending the discovery announcement message or the discovery application message based on the content carried in the discovery announcement message or discovery application message and the multi-hop relay authorization information.

Here, the terminal device may be a terminal device authorized to be an intermediate relay, a first relay UE, or a second relay UE.

In an example, in a case where it is determined to continue sending the discovery announcement message or the discovery application message, the terminal device updates or determines the first relay hop count carried in the discovery announcement message or discovery application message, and continues to send the discovery announcement message or discovery application message.

Here, the first relay hop count may include at least one of the following:
the number of relay hops that have occurred; or
the remaining relay hop count.

In an example, it further includes: the terminal device receiving a discovery response message, the discovery response message carrying an RSC and a final relay hop count; the terminal device sending the discovery response message.

Based on the above embodiments, in some embodiments, the relay communication method proposed in the present disclosure may further include:

A terminal device receiving discovery announcement messages from one or more first terminals, a discovery announcement message carrying an RSC supported by the first terminal sending the message and a first relay hop count corresponding to the RSC;

The terminal device selecting a first terminal from the one or more first terminals based on the content carried in the one or more discovery announcement messages.

Here, the terminal device may be a terminal device authorized to be a remote UE or an endpoint UE.

In an example, the first terminal includes at least one of an intermediate relay, a first relay UE, or a second relay UE. For example, when the terminal device is authorized to be a remote UE, the terminal device may receive discovery announcement messages from an intermediate relay and/or a first relay UE; for another example, when the terminal device is authorized to be an endpoint UE, the terminal device may receive discovery announcement messages from a second relay UE.

The first relay hop count may include at least one of the following:
the number of relay hops that have occurred; or
the remaining relay hop count.

In an example, the terminal device selecting a first terminal based on the content carried in the one or more discovery announcement messages includes:
in a case where the first relay hop count includes the number of relay hops that have occurred, the terminal device selecting a first terminal for which the number of relay hops that have occurred is the smallest; and/or,
in a case where the first relay hop count includes the remaining relay hop count, the terminal device selecting a first terminal for which the remaining relay hop count is the greatest.

In an example, it further includes: the terminal device receiving discovery response messages from one or more first terminals, a discovery response message carrying an RSC supported by the first terminal sending the message and a final relay hop count corresponding to the RSC; the terminal device selecting a first terminal based on the content carried in the one or more discovery response messages. For example, the terminal device may select a first terminal for which the final relay hop count is the smallest.

Based on the above embodiments, in a case where the terminal device is a terminal device authorized to be a first relay UE or an endpoint UE, in some embodiments, the relay communication method proposed in the present disclosure may further include: the terminal device sending a discovery announcement message, the discovery announcement message carrying an RSC and/or a first relay hop count.

Alternatively, in some embodiments, the relay communication method proposed in the present disclosure may further include:

The terminal device receiving a discovery application message, the discovery application message carrying an RSC and a first relay hop count;

The terminal device determining a final relay hop count based on the first relay hop count carried in the discovery application message;

The terminal device sending a discovery response message, the discovery response message carrying the RSC and the final relay hop count.

Here, the first relay hop count may include at least one of the following:
the number of relay hops that have occurred; or
the remaining relay hop count.

In some embodiments, the number of relay hops that have occurred (or current relay hop count) includes: the number of intermediate relays and first relay UEs through which the discovery announcement message or discovery application message has passed, or the number of second relay UEs through which the discovery announcement message or discovery application message has passed. The former corresponds to the scenario shown in FIG. 6, that is, the scenario where a remote UE communicates with the network through multiple relay UEs; the latter corresponds to the scenario shown in FIG. 7, that is, the scenario where two UEs communicate through multi-hop relay UEs.

In some embodiments, the remaining relay hop count includes the difference between the allowed maximum number of multi-hop relays corresponding to the RSC and the number of relay hops that have occurred.

In some embodiments, the final relay hop count includes: the number of intermediate relays through which the discovery application message has passed before reaching a first relay UE plus 1, or the number of second relay UEs through which the discovery application message has passed before reaching an endpoint UE. The former corresponds to the scenario shown in FIG. 6, that is, the scenario where a remote UE communicates with the network through multiple relay UEs; the latter corresponds to the scenario shown in FIG. 7, that is, the scenario where two UEs communicate through multi-hop relay UEs.

An embodiment of the present disclosure further provides a relay communication method. FIG. 12 is a schematic flowchart of a relay communication method 1200 according to an embodiment of the present disclosure. The method can optionally be applied to the system shown in FIGS. 1-6, but is not limited thereto. The method includes at least part of the following content.

S1210: a network device sends a proximity communication policy to a terminal device, wherein the proximity communication policy includes an RSC and multi-hop relay authorization information corresponding to the RSC.

The relay communication method proposed in the embodiments of the present disclosure, by sending the proximity communication policy from the network device to the terminal device, enables authorization of the terminal device's multi-hop relay capability, thereby solving the problem of how to discover relay UEs and obtain the relay hop count in the scenario where a UE needs to communicate with the network device through multiple relay UEs, or where two UEs need to communicate through multiple relay UEs, and further enabling support for multi-hop relay between a remote UE and the network device, and/or support for multi-hop relay between two UEs.

In some embodiments, the multi-hop relay authorization information includes at least one of the following:
whether multi-hop relay is permitted; or
an allowed maximum number of multi-hop relays.

In some embodiments, the proximity communication policy authorizes the terminal device to be an intermediate relay.

In some embodiments, the proximity communication policy authorizing the terminal device to be an intermediate relay includes:
the proximity communication policy authorizing the terminal device to be a remote UE and authorizing the terminal device to be a first relay UE.

In some embodiments, one or more intermediate relays are located between a remote UE and a first relay UE.

In some embodiments, an intermediate relay is connected to the remote UE and the first relay UE, respectively; or
an intermediate relay is connected to the remote UE and another intermediate relay, respectively; or
an intermediate relay is connected to two other intermediate relays, respectively; or
an intermediate relay is connected to another intermediate relay and the first relay UE, respectively.

In some embodiments, the remote UE accesses an operator network via one or more intermediate relays and a first relay UE.

In some embodiments, the first relay UE is connected to an operator network.

In some embodiments, the proximity communication policy authorizes the terminal device to be a second relay UE.

In some embodiments, a plurality of second relay UEs are located between two endpoint UEs.

In some embodiments, a second relay UE is connected to an endpoint UE and another second relay UE, respectively; or
a second relay UE is connected to two other second relay UEs, respectively.

In some embodiments, the proximity communication policy authorizes the terminal device to be an endpoint UE.

In some embodiments, the endpoint UE is connected to another endpoint UE via a plurality of second relay UEs.

Specific examples of the network device executing method 1200 in this embodiment can be found in the relevant descriptions of the network device, such as the core network element, in the aforementioned method 500 and Embodiments 1 to 4. For brevity, they are not repeated here.

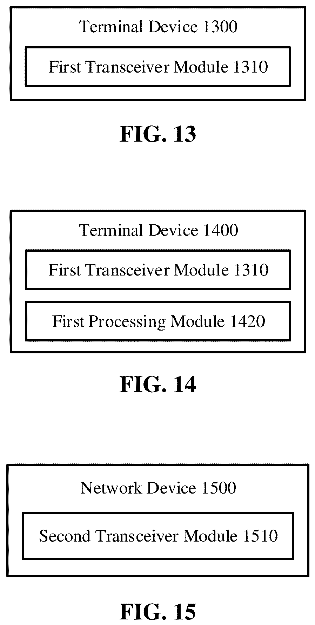

FIG. 13 is a schematic block diagram of a terminal device 1300 according to an embodiment of the present disclosure. The terminal device 1300 may include:

A first transceiver module 1310, configured to receive a proximity communication policy, wherein the proximity communication policy includes an RSC and multi-hop relay authorization information corresponding to the RSC.

In some embodiments, the multi-hop relay authorization information includes at least one of the following:
whether multi-hop relay is permitted; or
an allowed maximum number of multi-hop relays.

In some embodiments, the proximity communication policy authorizes the terminal device to be an intermediate relay.

In some embodiments, the proximity communication policy authorizing the terminal device to be an intermediate relay includes:
the proximity communication policy authorizing the terminal device to be a remote UE and authorizing the terminal device to be a first relay UE.

In some embodiments, the proximity communication policy authorizes the terminal device to be a second relay UE.

The first transceiver module 1310 is further configured to receive a discovery announcement message or a discovery application message, the discovery announcement message or discovery application message carrying an RSC and/or a first relay hop count.

FIG. 14 is a schematic block diagram of a terminal device 1400 according to an embodiment of the present disclosure. As shown in FIG. 14, the terminal device 1400 further includes:

A first processing module 1420, configured to determine whether to continue sending the discovery announcement message or the discovery application message based on the content carried in the discovery announcement message or discovery application message and the multi-hop relay authorization information.

In some embodiments, the first processing module 1420 is further configured to, in a case where it is determined to continue sending the discovery announcement message or the discovery application message, update or determine the first relay hop count carried in the discovery announcement message or discovery application message, and continue to send the discovery announcement message or discovery application message.

In some embodiments, the first transceiver module 1310 is further configured to receive a discovery response message, the discovery response message carrying an RSC and a final relay hop count; and to send the discovery response message.

In some embodiments, the proximity communication policy authorizes the terminal device to be a remote UE or an endpoint UE.

In some embodiments, the first transceiver module 1310 is further configured to receive discovery announcement messages from one or more first terminals, a discovery announcement message carrying an RSC supported by the first terminal sending the message and a first relay hop count corresponding to the RSC;

The first processing module 1420 is configured to select a first terminal from the one or more first terminals based on the content carried in the one or more discovery announcement messages.

In some embodiments, the first processing module 1420 is configured to: in a case where the first relay hop count includes the number of relay hops that have occurred, select a first terminal for which the number of relay hops that have occurred is the smallest; and/or,
in a case where the first relay hop count includes the remaining relay hop count, select a first terminal for which the remaining relay hop count is the greatest.

In some embodiments, the first transceiver module 1310 is further configured to receive discovery response messages from one or more first terminals, a discovery response message carrying an RSC supported by the first terminal sending the message and a final relay hop count corresponding to the RSC;

The first processing module 1420 is further configured to select a first terminal based on the content carried in the one or more discovery response messages.

In some embodiments, the first processing module 1420 is configured to select a first terminal for which the final relay hop count is the smallest.

In some embodiments, the first terminal includes at least one of an intermediate relay, a first relay UE, or a second relay UE.

In some embodiments, the proximity communication policy authorizes the terminal device to be a first relay UE or an endpoint UE.

The first transceiver module 1310 is further configured to send a discovery announcement message, the discovery announcement message carrying an RSC and/or a first relay hop count.

In some embodiments, the first transceiver module 1310 is further configured to receive a discovery application message, the discovery application message carrying an RSC and a first relay hop count;

The first processing module 1420 is further configured to determine a final relay hop count based on the first relay hop count carried in the discovery application message;

The first transceiver module 1310 is further configured to send a discovery response message, the discovery response message carrying the RSC and the final relay hop count.

In some embodiments, the first relay hop count includes at least one of the following:
the number of relay hops that have occurred; or
the remaining relay hop count.

In some embodiments, the number of relay hops that have occurred is the number of intermediate relays and first relay UEs through which the discovery announcement message or discovery application message has passed, or the number of second relay UEs through which the discovery announcement message or discovery application message has passed.

In some embodiments, the remaining relay hop count includes a difference between the allowed maximum number of multi-hop relays corresponding to the RSC and the number of relay hops that have occurred.

In some embodiments, the final relay hop count is the number of intermediate relays through which the discovery application message has passed before reaching a first relay UE plus 1, or the number of second relay UEs through which the discovery application message has passed before reaching an endpoint UE.

In some embodiments, one or more intermediate relays are located between a remote UE and a first relay UE.

In some embodiments, an intermediate relay is connected to the remote UE and the first relay UE, respectively; or
an intermediate relay is connected to the remote UE and another intermediate relay, respectively; or
an intermediate relay is connected to two other intermediate relays, respectively; or
an intermediate relay is connected to another intermediate relay and the first relay UE, respectively.

In some embodiments, the remote UE accesses an operator network via one or more intermediate relays and a first relay UE.

In some embodiments, the first relay UE is connected to an operator network.

In some embodiments, a plurality of second relay UEs are located between two endpoint UEs.

In some embodiments,
a second relay UE is connected to an endpoint UE and another second relay UE, respectively; or
a second relay UE is connected to two other second relay UEs, respectively.

In some embodiments, the endpoint UE is connected to another endpoint UE via a plurality of second relay UEs.

The terminal device 1300 and terminal device 1400 of the embodiments of the present disclosure can implement the corresponding functions of the terminal device in the foregoing method embodiments. The processes, functions, implementation methods, and beneficial effects corresponding to the various modules (sub-modules, units, or components, etc.) in the terminal device 1300 and terminal device 1400 can be referred to the corresponding descriptions in the foregoing method embodiments, and are not repeated here. It should be noted that the functions described for the various modules (sub-modules, units, or components, etc.) in the terminal device 1300 and terminal device 1400 of the embodiments of the present disclosure can be implemented by different modules (sub-modules, units, or components, etc.) or by the same module (sub-module, unit, or component, etc.).

FIG. 15 is a schematic block diagram of a network device 1500 according to an embodiment of the present disclosure. The network device 1500 may include:

A second transceiver module 1510, configured to send a proximity communication policy to a terminal device, wherein the proximity communication policy includes an RSC and multi-hop relay authorization information corresponding to the RSC.

In some embodiments, the multi-hop relay authorization information includes at least one of the following:
whether multi-hop relay is permitted; or
an allowed maximum number of multi-hop relays.

In some embodiments, the proximity communication policy authorizes the terminal device to be an intermediate relay.

In some embodiments, the proximity communication policy authorizing the terminal device to be an intermediate relay includes:
the proximity communication policy authorizing the terminal device to be a remote UE and authorizing the terminal device to be a first relay UE.

In some embodiments, one or more intermediate relays are located between a remote UE and a first relay UE.

In some embodiments, an intermediate relay is connected to the remote UE and the first relay UE, respectively; or
an intermediate relay is connected to the remote UE and another intermediate relay, respectively; or
an intermediate relay is connected to two other intermediate relays, respectively; or
an intermediate relay is connected to another intermediate relay and the first relay UE, respectively.

In some embodiments, the remote UE accesses an operator network via one or more intermediate relays and a first relay UE.

In some embodiments, the first relay UE is connected to an operator network.

In some embodiments, the proximity communication policy authorizes the terminal device to be a second relay UE.

In some embodiments, a plurality of second relay UEs are located between two endpoint UEs.

In some embodiments, a second relay UE is connected to an endpoint UE and another second relay UE, respectively; or
a second relay UE is connected to two other second relay UEs, respectively.

In some embodiments, the proximity communication policy authorizes the terminal device to be an endpoint UE.

In some embodiments, the endpoint UE is connected to another endpoint UE via a plurality of second relay UEs.

The network device 1500 of the embodiments of the present disclosure can implement the corresponding functions of the network device in the foregoing method embodiments. The processes, functions, implementation methods, and beneficial effects corresponding to the various modules (sub-modules, units, or components, etc.) in the network device 1500 can be referred to the corresponding descriptions in the foregoing method embodiments, and are not repeated here. It should be noted that the functions described for the various modules (sub-modules, units, or components, etc.) in the network device 1500 of the embodiments of the present disclosure can be implemented by different modules (sub-modules, units, or components, etc.) or by the same module (sub-module, unit, or component, etc.).

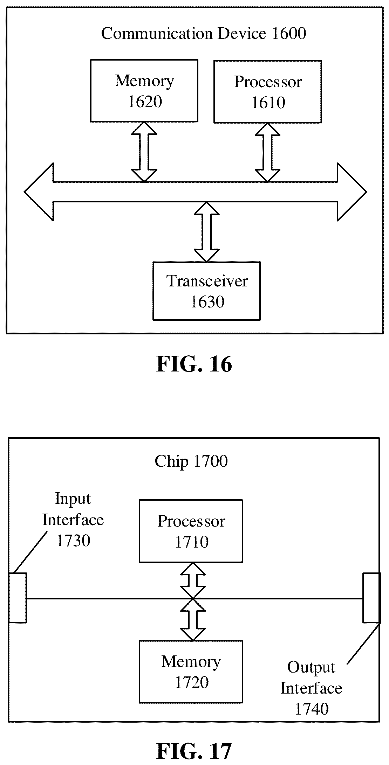

FIG. 16 is a schematic structural diagram of a communication device 1600 according to an embodiment of the present disclosure. The communication device 1600 includes a processor 1610. The processor 1610 can invoke and run a computer program from a memory to cause the communication device 1600 to implement the method in the embodiments of the present disclosure.

In one implementation, the communication device 1600 may further include a memory 1620. The processor 1610 can invoke and run a computer program from the memory 1620 to cause the communication device 1600 to implement the method in the embodiments of the present disclosure.

The memory 1620 may be a separate device independent of the processor 1610, or may be integrated in the processor 1610.

In one implementation, the communication device 1600 may further include a transceiver 1630. The processor 1610 can control the transceiver 1630 to communicate with other devices, specifically, to send information or data to other devices, or receive information or data sent by other devices.

The transceiver 1630 may include a transmitter and a receiver. The transceiver 1630 may further include one or more antennas.

In one implementation, the communication device 1600 may be a network device according to an embodiment of the present disclosure, and the communication device 1600 may implement the corresponding processes implemented by the network device in the various methods of the embodiments of the present disclosure. For brevity, details are not repeated here.

In one implementation, the communication device 1600 may be a terminal device according to an embodiment of the present disclosure, and the communication device 1600 may implement the corresponding processes implemented by the terminal device in the various methods of the embodiments of the present disclosure. For brevity, details are not repeated here.

FIG. 17 is a schematic structural diagram of a chip 1700 according to an embodiment of the present disclosure. The chip 1700 includes a processor 1710. The processor 1710 can invoke and run a computer program from a memory to implement the method in the embodiments of the present disclosure.

In one implementation, the chip 1700 may further include a memory 1720. The processor 1710 can invoke and run a computer program from the memory 1720 to implement the method executed by the terminal device or the network device in the embodiments of the present disclosure.

The memory 1720 may be a separate device independent of the processor 1710, or may be integrated in the processor 1710.

In one implementation, the chip 1700 may further include an input interface 1730. The processor 1710 can control the input interface 1730 to communicate with other devices or chips, specifically, to obtain information or data sent by other devices or chips.

In one implementation, the chip 1700 may further include an output interface 1740. The processor 1710 can control the output interface 1740 to communicate with other devices or chips, specifically, to output information or data to other devices or chips.

In one implementation, the chip can be applied to the network device in the embodiments of the present disclosure, and the chip can implement the corresponding processes implemented by the network device in the various methods of the embodiments of the present disclosure. For brevity, details are not repeated here.

In one implementation, the chip can be applied to the terminal device in the embodiments of the present disclosure, and the chip can implement the corresponding processes implemented by the terminal device in the various methods of the embodiments of the present disclosure. For brevity, details are not repeated here.

The chips applied to the network device and the terminal device may be the same chip or different chips.

It should be understood that the chip mentioned in the embodiments of the present disclosure may also be referred to as a system-level chip, a system-on-chip, a chip system, or a system-on-a-chip, etc.

The aforementioned processor may be a general-purpose processor, a digital signal processor (DSP), a Field Programmable Gate Array (FPGA), an Application Specific Integrated Circuit (ASIC), or other programmable logic devices, transistor logic devices, discrete hardware components, etc. The aforementioned general-purpose processor may be a microprocessor or any conventional processor, etc.

The aforementioned memory may be a volatile memory or a non-volatile memory, or may include both volatile and non-volatile memory. The non-volatile memory may be Read-Only Memory (ROM), Programmable ROM (PROM), Erasable PROM (EPROM), Electrically EPROM (EEPROM), or flash memory. The volatile memory may be Random Access Memory (RAM).

It should be understood that the above description of the memory is exemplary but not limiting. For example, the memory in the embodiments of the present disclosure may also be Static RAM (SRAM), Dynamic RAM (DRAM), Synchronous DRAM (SDRAM), Double Data Rate SDRAM (DDR SDRAM), Enhanced SDRAM (ESDRAM), Synch Link DRAM (SLDRAM), and Direct Rambus RAM (DR RAM), etc. That is, the memory in the embodiments of the present disclosure is intended to include, but is not limited to, these and any other suitable types of memory.

In the above embodiments, the implementation may be in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions according to the embodiments of the present disclosure are generated in whole or in part. The computer may be a general-purpose computer, a special-purpose computer, a computer network, or other programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center by wired means (e.g., coaxial cable, fiber optic, Digital Subscriber Line (DSL)) or wireless means (e.g., infrared, wireless, microwave, etc.). The computer-readable storage medium may be any available medium that can be accessed by a computer or a data storage device, such as a server or data center, integrated with one or more available media. The available medium may be a magnetic medium (e.g., floppy disk, hard disk, magnetic tape), an optical medium (e.g., DVD), or a semiconductor medium (e.g., Solid State Disk (SSD)), etc.

It should be understood that in the various embodiments of the present disclosure, the sequence numbers of the above processes do not imply an order of execution, which should be determined by their functions and internal logic, and should not constitute any limitation on the implementation process of the embodiments of the present disclosure.

Those skilled in the art can clearly understand that for the convenience and brevity of description, the specific working processes of the systems, apparatuses, and units described above may refer to the corresponding processes in the foregoing method embodiments and are not repeated here.

The above are only specific implementations of the present disclosure, but the scope of protection of the present disclosure is not limited thereto. Any person skilled in the art can easily think of changes or substitutions within the technical scope disclosed in the present disclosure, which should be covered within the scope of protection of the present disclosure. Therefore, the scope of protection of the present disclosure should be subject to the scope of protection of the claims.

## Claims

1. A relay communication method, comprising:
receiving, by a terminal device, a proximity communication policy, wherein the proximity communication policy comprises a relay service code (RSC) and multi-hop relay authorization information corresponding to the RSC.

2. The method according to claim 1, wherein the multi-hop relay authorization information comprises at least one of the following:
whether multi-hop relay is permitted; or
an allowed maximum number of multi-hop relays.

3. The method according to claim 1 or 2, wherein the proximity communication policy authorizes the terminal device to be an intermediate relay.

4. The method according to claim 3, wherein the proximity communication policy authorizing the terminal device to be the intermediate relay comprises:
the proximity communication policy authorizing the terminal device to be a remote user equipment (UE) and authorizing the terminal device to be a first relay UE.

5. The method according to claim 1 or 2, wherein the proximity communication policy authorizes the terminal device to be a second relay UE.

6. The method according to any one of claims 1 to 5, further comprising:
receiving, by the terminal device, a discovery announcement message or a discovery application message, wherein the discovery announcement message or discovery application message carries an RSC and/or a first relay hop count; and
determining, by the terminal device, whether to continue sending the discovery announcement message or the discovery application message, based on content carried in the discovery announcement message or discovery application message and the multi-hop relay authorization information.

7. The method according to claim 6, further comprising:
in a case where it is determined to continue sending the discovery announcement message or the discovery application message, updating or determining, by the terminal device, the first relay hop count carried in the discovery announcement message or discovery application message, and continuing to send the discovery announcement message or discovery application message.

8. The method according to claim 6 or 7, further comprising:
receiving, by the terminal device, a discovery response message, wherein the discovery response message carries an RSC and a final relay hop count; and
sending, by the terminal device, the discovery response message.

9. The method according to claim 1 or 2, wherein the proximity communication policy authorizes the terminal device to be a remote UE or an endpoint UE.

10. The method according to claim 1, 2, or 9, further comprising:
receiving, by the terminal device, discovery announcement messages from one or more first terminals, wherein a discovery announcement message carries an RSC supported by the first terminal sending the message and a first relay hop count corresponding to the RSC; and
selecting, by the terminal device, a first terminal from the one or more first terminals based on content carried in the one or more discovery announcement messages.

11. The method according to claim 10, wherein the selecting, by the terminal device, a first terminal based on the content carried in the one or more discovery announcement messages comprises:
in a case where the first relay hop count comprises a number of relay hops that have occurred, selecting, by the terminal device, a first terminal for which the number of relay hops that have occurred is the smallest; and/or
in a case where the first relay hop count comprises a remaining relay hop count, selecting, by the terminal device, a first terminal for which the remaining relay hop count is the greatest.

12. The method according to claim 1, 2, or 9, further comprising:
receiving, by the terminal device, discovery response messages from one or more first terminals, wherein a discovery response message carries an RSC supported by the first terminal and a final relay hop count corresponding to the RSC; and
selecting, by the terminal device, a first terminal based on the content carried in the one or more discovery response messages.

13. The method according to claim 12, wherein the selecting, by the terminal device, a first terminal based on the content carried in the one or more discovery response messages comprises: selecting, by the terminal device, a first terminal for which the final relay hop count is the smallest.

14. The method according to any one of claims 10 to 13, wherein the first terminal comprises at least one of an intermediate relay, a first relay UE, or a second relay UE.

15. The method according to claim 1 or 2, wherein the proximity communication policy authorizes the terminal device to be a first relay UE or an endpoint UE.

16. The method according to claim 1, 2, or 15, further comprising:
sending, by the terminal device, a discovery announcement message, wherein the discovery announcement message carries an RSC and/or a first relay hop count.

17. The method according to claim 1, 2, or 15, further comprising:
receiving, by the terminal device, a discovery application message, wherein the discovery application message carries an RSC and a first relay hop count;
determining, by the terminal device, a final relay hop count based on the first relay hop count carried in the discovery application message; and
sending, by the terminal device, a discovery response message, wherein the discovery response message carries the RSC and the final relay hop count.

18. The method according to any one of claims 6 to 8, 10 to 11, and 16 to 17, wherein the first relay hop count comprises at least one of the following:
a number of relay hops that have occurred; or
a remaining relay hop count.

19. The method according to claim 18, wherein the number of relay hops that have occurred is a number of intermediate relays and first relay UEs through which the discovery announcement message or discovery application message has passed, or a number of second relay UEs through which the discovery announcement message or discovery application message has passed.

20. The method according to claim 18 or 19, wherein the remaining relay hop count comprises a difference between an allowed maximum number of multi-hop relays corresponding to the RSC and a number of relay hops that have occurred.

21. The method according to claim 8, 12, 13, or 17, wherein the final relay hop count is a number of intermediate relays through which the discovery application message has passed before reaching a first relay UE plus 1, or a number of second relay UEs through which the discovery application message has passed before reaching an endpoint UE.

22. The method according to claim 3, 4, or 14, wherein one or more intermediate relays are located between a remote UE and a first relay UE.

23. The method according to claim 22, wherein
the intermediate relay is connected to the remote UE and the first relay UE, respectively; or
the intermediate relay is connected to the remote UE and another intermediate relay, respectively; or
the intermediate relay is connected to two other intermediate relays, respectively; or
the intermediate relay is connected to another intermediate relay and the first relay UE, respectively.

24. The method according to claim 4, 9, 22, or 23, wherein the remote UE accesses an operator network via one or more intermediate relays and a first relay UE.

25. The method according to claim 4, 14, 15, 22, 23, or 24, wherein the first relay UE is connected to an operator network.

26. The method according to claim 5 or 14, wherein a plurality of the second relay UEs are located between two endpoint UEs.

27. The method according to claim 26, wherein:
a second relay UE is connected to an endpoint UE and another second relay UE, respectively; or
a second relay UE is connected to two other second relay UEs, respectively.

28. The method according to claim 9, 15, 26, or 27, wherein the endpoint UE is connected to another endpoint UE via a plurality of second relay UEs.

29. A relay communication method, comprising:
sending, by a network device, a proximity communication policy to a terminal device, wherein the proximity communication policy comprises a relay service code (RSC) and multi-hop relay authorization information corresponding to the RSC.

30. The method according to claim 29, wherein the multi-hop relay authorization information comprises at least one of the following:
whether multi-hop relay is permitted; or
an allowed maximum number of multi-hop relays.

31. The method according to claim 29 or 30, wherein the proximity communication policy authorizes the terminal device to be an intermediate relay.

32. The method according to claim 31, wherein the proximity communication policy authorizing the terminal device to be an intermediate relay comprises:
the proximity communication policy authorizing the terminal device to be a remote UE and authorizing the terminal device to be a first relay UE.

33. The method according to claim 31 or 32, wherein one or more intermediate relays are located between a remote UE and a first relay UE.

34. The method according to claim 33, wherein
the intermediate relay is connected to the remote UE and the first relay UE, respectively; or
the intermediate relay is connected to the remote UE and another intermediate relay, respectively; or
the intermediate relay is connected to two other intermediate relays, respectively; or
the intermediate relay is connected to another intermediate relay and the first relay UE, respectively.

35. The method according to claim 32 or 33, wherein the remote UE accesses an operator network via one or more intermediate relays and a first relay UE.

36. The method according to any one of claims 32 to 35, wherein the first relay UE is connected to an operator network.

37. The method according to claim 29 or 30, wherein the proximity communication policy authorizes the terminal device to be a second relay UE.

38. The method according to claim 37, wherein a plurality of second relay UEs are located between two endpoint UEs.

39. The method according to claim 38, wherein:
the second relay UE is connected to an endpoint UE and another second relay UE, respectively; or
the second relay UE is connected to two other second relay UEs, respectively.

40. The method according to claim 29 or 30, wherein the proximity communication policy authorizes the terminal device to be an endpoint UE.

41. The method according to claim 40, wherein the endpoint UE is connected to another endpoint UE via a plurality of second relay UEs.

42. A terminal device, comprising:
a first transceiver module, configured to receive a proximity communication policy, wherein the proximity communication policy comprises a relay service code (RSC) and multi-hop relay authorization information corresponding to the RSC.

43. A network device, comprising:
a second transceiver module, configured to send a proximity communication policy to a terminal device, wherein the proximity communication policy comprises a relay service code (RSC) and multi-hop relay authorization information corresponding to the RSC.

44. A terminal device, comprising: a transceiver, a processor, and a memory, wherein the memory is configured to store a computer program, the transceiver is configured to communicate with other devices, and the processor is configured to invoke and run the computer program stored in the memory to cause the terminal device to perform the method according to any one of claims 1 to 28.

45. A network device, comprising: a transceiver, a processor, and a memory, wherein the memory is configured to store a computer program, the transceiver is configured to communicate with other devices, and the processor is configured to invoke and run the computer program stored in the memory to cause the network device to perform the method according to any one of claims 29 to 41.

46. A chip, comprising: a processor, configured to invoke and run a computer program from a memory, to cause a device equipped with the chip to perform the method according to any one of claims 1 to 28 or 29 to 41.

47. A computer-readable storage medium, configured to store a computer program, wherein when the computer program is run by a device, the device is caused to perform the method according to any one of claims 1 to 28 or 29 to 41.

48. A computer program product, comprising computer program instructions, wherein the computer program instructions cause a computer to perform the method according to any one of claims 1 to 28 or 29 to 41.

49. A computer program, wherein the computer program causes a computer to perform the method according to any one of claims 1 to 28 or 29 to 41.
